Europäisches Patentamt

European Patent Office

Office européen des brevets

(11) Publication number: **0 185 360 B1**

(19)

(12) **EUROPEAN PATENT SPECIFICATION**

(45) Date of publication of patent specification: **13.05.92**  (51) Int. Cl.⁵: **G02B 6/28**

(21) Application number: **85116101.8**

(22) Date of filing: **17.12.85**

(54) Optical-fibre coupler.

(30) Priority: **19.12.84 IT 6826084**

(43) Date of publication of application:
**25.06.86 Bulletin 86/26**

(45) Publication of the grant of the patent:
**13.05.92 Bulletin 92/20**

(84) Designated Contracting States:
**DE FR GB NL**

(56) References cited:
**DE-A- 2 415 046**
**US-A- 3 883 223**

**IBM TECHNICAL DISCLOSURE BULLETIN, vol. 23, no. 3, August 1980, page 978; F.J. BEALLE "Parabolic coupler for fibre optics"**

**APPLIED OPTICS, vol. 21, no. 19, October 1982, pages 3456-3460, New York, US; K. IGA et al.: "Stacked planar optics: an application of the planar microlens"**

**LASER FOCUS, vol. 20, no. 5, May 1984, pages 40-44, Newton, Massachusetts, US; "Gradient-Index planar microlens makes possible a stacked optical integrated cir-**
cuit"

(73) Proprietor: **CSELT Centro Studi e Laboratori Telecomunicazioni S.p.A.**
**Via Guglielmo Reiss Romoli, 274**
**I-10148 Turin(IT)**

(72) Inventor: **Modone, Eros**
**Via Cibrario, 45**
**Torino(IT)**
Inventor: **Morasca, Salvatore**
**Via Milano, 162**
**Como(IT)**

(74) Representative: **Riederer Freiherr von Paar zu Schönau, Anton et al**
**Van der Werth, Lederer & Riederer Freyung**
**615 Postfach 2664**
**W-8300 Landshut(DE)**

## Description

The present invention concerns telecomunications systems using light radiations guided by transmission media and more particularly it concerns a coupler for optical fibres, as defined in the prior art portion of claim 1, such prior art being known from IBM Technical Disclosure Bulletin, Vol. 23, No. 3, August 1980, page 978: F.J. Bealle, "Parabolic Coupler for Fibre Optics".

A technical problem to be solved in optical fibre interconnection is the power distribution from a transmission medium to a plurality of media while keeping uniform the coupling and low the power loss. In fact, while the loss in case of a coupler between two fibres only is basically due to non-perfect alignment and to different optical-fibres characteristics, the coupling loss among one and a plurality of fibres can be also due to shaded zones. Owing to these, the optical power outgoing from a fibre is not entirely collected by the other fibres. In addition a good coupler is to keep the original light beam characteristics unchanged and above all those concerning the modal distribution. In other words, different order modes propagating into fibres are not to be mixed. This would cause, e.g., a distortion of transmitted optical pulses, in case of multimode fibres, and excitation of non propagating modes in case of monomode fibres. As to fabrication, design and mechanical parts ought to be simplified as much as possible and the number of different materials used ought to be reduced. Finally the coupler is to be made insensititve to external mechanical strains, which could give rise to misalignments and hence power losses.

An optical coupler is described in "Advances in Ceramics. II Vol. Physics of Fiber Optics" by Kapany, edited by "The American Ceramic Society". This coupler couples a fibre to two other fibres, by exploiting power reflection operated by two semi-spherical surfaces. They concentrate the radiation emitted by a fibre into the other two. Yet this coupler presents a number of disadvantages, among which:

- optical-signal distortion due to different lengths of the optical paths joining different fibres and the various point of semispherical surfaces;
- impossibility of coupling more than two fibres, without essential modifications in the geometric shape of reflecting surfaces;
- sensitivity to mechanical vibrations, as single fibres and reflecting surfaces undergo mutual oscillations.

In fact, to optimize the optical path it is necessary to leave a certain distance in the air between the fibre ends and the reflecting surfaces, and as a consequence, the coupler can not be made in one piece.

Another coupling technique among a plurality of fibres consists of fusing a bundle of fibres duly prepared, so obtaining a zone where there is no core distinction. The fused zone is then drawn and possibly machined. Yet said coupler is difficult to make due both to preparation of single fibres which must generally be deprived of the coat, and to correct fusion of the whole. In addition an inconvenience of this coupling is that is causes propagating modes to be mixed.

The initially mentioned prior art (IBM Technical Disclosure Bulletin) uses a hollow mirror body having an internal parabolic mirror surface, along the axis of which an optical output fibre is located, terminating in the focus of the parabolic surface, while a distance therefrom close to the circumference of the recess of the hollow reflecting body, a ring of optical input fibres is arranged, the signals transmitted therethrough being summed up by the central output fibre. The central output fibre may be equipped with a convex end phase so as to constitute a lense shape. Coupling through the air space within the mirror body causes difficulties as mentioned, the number of input fibres is restricted by the centering fibre guiding plate consisting of two concentric rings and by the fact that the paraboloid part the reflected rays from which can be coupled is restricted by the numerical appertures of the optical fibres, with the general consequence that only a part of the reflected light can be evaluated. Besides, the two-ring-construction of the centering plate is to be plugged into the hollow recess of the mirror body after insertion and fastening of the fibre ends, the coupler thus not being a one-piece implement and being sensitive to mechanical strain and vibration.

Said disadvantages are overcome by the optical fibre coupler provided by the present invention, which allows the coupling between one and whatever number of fibres, does not suffer in case of mechanical vibrations, can be made in one piece, does not cause propagating modes to be mixed and is small sized (a 6-fibre coupler could be housed in a 4 mm side cube). Besides radiation intensity collected by each fibre can be varied by a suitable mask, thus obtaining an optical signal processing.

This can be made by adopting a technology similar to the one known for lenses, particularly for stacked planar opticas also usable for coupling two optical fibres as described in Applied Optics, Vol.

21 No. 19, October 1982, pages 3456-3460, Iga et al: "Stacked Planar Optics: An Application of the Planar Microlens".

The coupler for optical fibres, according to the present invention, is characterized in that the first reflecting member is a solid glass body;

that between said plane surfaces of the glass body and the centering plate, a glass part is inserted, shaped like a plate with two parallel plane surfaces, the plane surface of the glass body being soldered to the first plane surface of the glass part or the glass body and the glass part being made of one glass piece, and the glass plane surface of the second part being soldered to the one of the plane surfaces of the centering plate which faces the first reflecting member;

that the glass part contains hemispherical lenses having a planar surface each and arranged such that the respective planar surfaces of the hemispherical lenses lie in one of the plane surfaces of this glass part and the optical axes of the hemispherical lenses coincide with the optical axes of the optical fibre guides; respectively;

and that the paraboloid's focus lies on the image plane of a central fibre to be inserted, so as to send light radiation from the central fibre to a plurality of fibres or vice-versa.

The paraboloid's focus has to lie on the image plane of the central fibre in order to reflect the incoming optical beam as a plane wave. On the other hand, the device has also to be suitable to act inversely, i.e. the central fibre has to be able to act as a collector for the light emitted from the peripheral fibres. Thus the position of the central fibre is essential for the functioning of the device.

The design of claim 2 even further widens the range of the angle of light to be exploited which angle is not limited by the numerical aperture of the optical fibre. By putting the axial fibre end to a point suited to illuminate the whole facing lens, this renders divergent the optical beam coming from the fibre, or vice-versa, in order to illuminate the whole paraboloid and then all the remaining fibres which can be packed all over the ring-shaped zone surrounding the central fibre.

Further preferred details of the invention will appear from the following description given, by way of example, of an embodiment of the invention illustrated with reference to the accopanying drawings, in which:
- Fig. 1 is a longitudinal sectional view of the optical fibre coupler;
- Fig. 2 shows the plate denoted by P in Fig. 1.

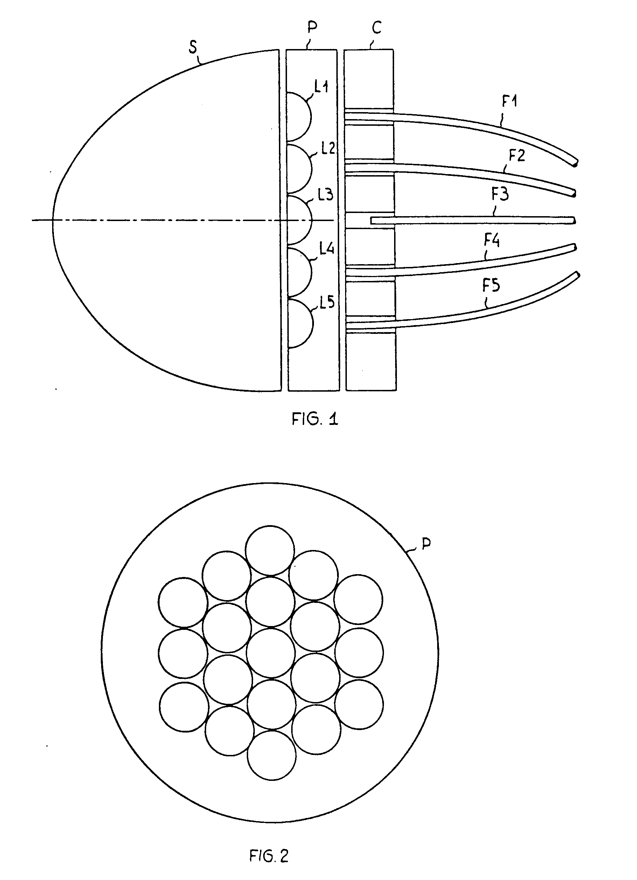

The coupler, shown in Fig. 1, consists of a first part S made of glass, having the geometical shape of a round paraboloid limited by a plane perpendicular to the axis. The external surface of the curved zone is rendered reflective towards the concavity of the paraboloid by deposition of a suitable material, e.g. silver, aluminium, etc.

A second part consists of glass plate P, with plane and parallel surfaces wherein hemispherical lenses L1, ... L5 are obtained. Said lenses are preferably distributed along concentric circles, with their maximum circles lying on one of the plane surfaces of the plate.

This surface is soldered by suitable optical glue to the plane surface of the paraboloid.

Optical fibres F1, ..., F5, integral with plate P and held in a fixed position by a suitable centering plate C, are placed with their axes coincident with those of lenses. Plate C is provided with guides perpendicular to the surfaces and is soldered to plate P.

The thickness of plate P containing the lenses depends on the focal lenght of the lenses considered, since to optimize the radiation power entering and emerging from the fibres it is necessary to respect the optical system geometry.

Fibre F3, which has its axis coincident with the axis of the paraboloid, illuminates central semispherical lens L3 from a distance greater than the focal distance of the lens.

The paraboloid focus lies on image plane of fibre F3, while the paraboloid reflects the optical beam as a plane wavefront in turn condensed by the lenses on the single output fibre. The device can also operate inversely, i.e. the central fibre can act as a collector of the radiations coming from all the other fibres.

A possible device can comprise 19 fibres, one input fibre and 18 output fibres, arranged in numbers of 6 and 12 on two concentric circles.

In this case the losses due to geometric factors can be reduced to a minimum value of 1.4 dB. Of course the losses decrease with the increase of the number of coupled fibres. In this case plate P can be made as in Fig. 2, with lenses symmetrically placed around the center.

A third circle would comprise a number of fibres which is twice as great as that of the fibres lying on the second circle, i.e. 24 fibres.

At the present state of glass technology the coupler size and maximum fibre density mainly depend on lense sizes. A reduction of these improves the optical and geometric characteristics of the optical coupler.

A possible method of making hemispherical lenses exploits the ion electrophoresis causing a refractive index variation in a kind of glass of suitable chemical composition. Plate P is masked according to a desired geometry and is immersed into a galvanic bath of the melt salt of the diffusing ion. Diffusion laws ensure the fabrication of hemispherical lenses with graded index. Such a method is described in "Stacked planar optics by the use of planar microlens array" by K. Iga et al. Procedings of 10th ECOC '84 - 3-6 September 1984 - Liederhalle, Stuttgart.

As an alternative the lenses can be directly obtained with ion implantation on the plane paraboloid surface, fabricating the whole coupler in one piece.

Variations and modifications to the above embodiments may be made without departing from the scope of the invention as claimed.

## Claims

1. A coupler for optical fibres consisting of:

a first reflecting member (S) having a paraboloidal concave reflecting surface which is limited by a plane perpendicular to the paraboloid's axis;

and a centering fibre guiding plate (C) with at least one plane surface arranged parallel to the plane of the first reflecting member, the plate (C) being connected with the reflecting member (S) and having fibre guides therethrough perpendicular to said one plane surface for inserting a plurality of optical fibres therein, one of the optical fibre guides coinciding with the paraboloid's axis,

characterized in

that the first reflecting member is a solid glass body (S);

that between said plane surfaces of the glass body (S) and the centering plate (C), a glass part (P) is inserted, shaped like a plate with two parallel plane surfaces, the plane surface of the glass body (S) being soldered to the first plane surface of the glass part (P), or the glass body and the glass part (S, P) being made of one glass piece, and the second plane surface of the glass part (P) being soldered to the one of the plane surfaces of the centering plate (C), which faces the first reflecting member;

that the glass part (P) contains hemispherical lenses (L1, ..., L5) having a planar surface each and arranged such that the respective planar surfaces of the hemispherical lenses lie in one of the plane surfaces of this glass part (P) and the optical axes of the hemispherical lenses coincide with the optical axes of the optical fibre guides, respectively; and that the paraboloid's focus lies on the image plane of a central fibre to be inserted, so as to send light radiation from the central fibre to a plurality of fibres or vice-versa.

2. Coupler according to claim 1, characterized in that optical fibres are inserted and in that the end faces of the optical fibres inserted into the guides of the centering plate (C) are arranged such as to coincide with the foci of the hemispherical lenses (L1, ..., L5) except for the end face of the fibre lying on the paraboloid's axis, which fibre is arranged to have a distance exceeding the focal distance of the respective lens.

3. Coupler according to claim 2, characterized in that the hemispherical lenses of the glass part (P) and the corresponding guides of the centering plate (C) are arranged on concentric circles, whose centres lie on the paraboloid's axis.

4. Coupler according to claim 3, characterized in that in the centre of said concentric circles a fibre is placed, six fibres are placed on the first circle, a number twice as great on the second, on the third a number twice as great as that of the second and so on.

## Revendications

1. Coupleur pour fibres optiques qui est constituè par:

une première partie réfléchissante (S) ayant une surface réfléchissante avec la forme d'un paraboloïde concave limité par un plan perpendiculaire à l'axe du paraboloïde lui-même;

et une plaque de centrage pour le guidage de la fibre (C), avec au moins une surface plane placée parallèle au plan de la première partie réfléchissante, la plaque (C) étant reliée à la partie réfléchissante (S) et ayant des guides pour les fibres qui la traversent perpendiculairement à ladite surface plane pour y recevoir plusieurs fibres optiques, un des guides pour fibres optiques coïncidant avec l'axe du paraboloïde,

caractérisé en ce que

la première partie réfléchissante est un corps solide en verre (S);

en ce que entre lesdites surfaces planes du corps en verre (S) et de la plaque de centrage (C) on a inséré une partie en verre (P) ayant la forme d'une plaque avec deux surfaces planes parallèles, la surface plane du corps en verre (S) étant soudée à la première surface plane de la partie en verre (P), ou le corps en verre et la partie en verre (S,P) sont réalisés en une seule pièce en verre, et la seconde surface plane de la partie en verre (P) étant soudée à une des surfaces planes de la plaque de centrage (C), qui fait face à la première partie réfléchissante;

en ce que la partie en verre (P) contient des lentilles hémisphériques (L1,...,L5) ayant chacune une surface planaire et rangées de manière que les respectives surfaces planaires des lentilles hémisphériques sont placées dans une des surfaces planes de la dite partie en verre (P) et les axes optiques des lentilles hémisphériques coïncident avec les axes optiques des guides des fibres optiques respectivement;

et en ce que le foyer du paraboloïde est dans le plan image d'une fibre centrale à insérer, de manière à envoyer la radiation lumineuse de la fibre centrale à une pluralité de fibres ou vice versa.

2. Coupleur selon la revendication 1, caractérisé en ce que les fibres optiques sont insérées dans les guides de la plaque de centrage (C) et que les faces terminales des fibres optiques insérées sont rangées de manière qu'elles coïncident avec les foyers des lentilles hémisphériques (L1,..,L5), exception faite pour la face terminale de la fibre placée sur l'axe du paraboloïde, ladite fibre étant rangée de manière que sa distance est plus grande que la distance focale de la lentille respective.

3. Coupleur selon la revendication 2, caractérisé en ce que les lentilles hémisphériques de la partie en verre (P) et les guides correspondants de la plaque de centrage (C) sont placés sur des cercles concentriques, dont les centres se trouvent sur l'axe du paraboloïde.

4. Coupleur selon la revendication 3, caractérisé en ce qu'au centre desdits cercles concentriques il y a une fibre, sur le premier cercle il y a six fibres, sur le deuxième un nombre de fibres qui est le double du premier, sur le trosième un nombre qui est le double du deuxième et ainsi de suite.

**Patentansprüche**

1. Koppler für optische Fasern, bestehend aus: einem ersten reflektierenden Teil (S) mit einer paraboloiden konkaven reflektierenden Fläche, die durch eine Ebene begrenzt ist, welche senkrecht zur Achse des Paraboloids verläuft; und einer die Faser führenden Zentrierplatte (C) mit wenigstens einer ebenen Fläche, die parallel zur Ebene des ersten reflektierenden Teils angeordnet ist, wobei die Platte (c) mit dem reflektierenden Teil (S) verbunden ist und durch sie senkrecht zu dieser einen ebenen Fläche hindurchverlaufende Faserführungen zum Einsetzen einer Vielzahl der optischen Fasern aufweist, und eine der Führungen für die optischen Fasern mit der Paraboloidachse zusammenfällt,

dadurch gekennzeichnet,

daß das erste reflektierende Teil ein Vollglaskörper (S) ist;

daß zwischen den ebenen Flächen des Glaskörpers (S) und der Zentrierplatte (C) ein Glasteil (P) eingesetzt ist, das wie eine Platte mit zwei parallelen ebenen Flächen geformt ist, daß die ebene Fäche des Glaskörpers (S) an die erste ebene Fläche des Glasteils (P) gekittet ist oder der Glaskörper und das Glasteil (S, P) aus einem einzigen Glasstück bestehen, und daß die zweite ebene Fläche des Glasteils (P) auf die eine der ebenen Flächen der Zentrierplatte (C), die zum ersten reflektierenden Teil zu gerichtet ist, gekittet ist; daß das Glasteil (P) halbkugelförmige Linsen (L1...L5) enthält, die jeweils eine ebene Fläche aufweisen und die so angeordnet sind, daß die entsprechenden ebenen Flächen der halbkugelförmigen Linsen in einer der ebenen Flächen dieses Glasteils (P) liegen und die optischen Achsen der halbkugelförmigen Linsen mit den optischen Achsen der Führungen für die optischen Fasern jeweils zusammenfallen;

und daß der Brennpunkt des Paraboloids in der Bildebene einer einzusetzenden zentralen Faser liegt, um so Lichtstrahlung von der zentralen Faser zu einer Vielzahl von Fasern oder umgekehrt zu senden.

2. Koppler nach Anspruch 1, dadurch gekennzeichnet, daß die optischen Fasern so eingesetzt und die Endflächen der in die Führungen der Zentrierplatte (C) eingesetzten optischen Fasern so angeordnet sind, daß sie mit den Brennpunkten der halbkugelförmigen Linsen (L1...L5) zusammenfallen, mit Ausnahme der Endfläche der auf der Paraboloidachse liegenden Faser, die so angeordnet ist, daß sie einen Abstand hat, der die Brennweite der betreffenden Linse übertrifft.

3. Koppler nach Anspruch 2, dadurch gekennzeichnet, daß die halbkugelförmigen Linsen des Glasteils (P) und die entsprechenden Führungen der Zentrierplatte (C) auf konzentrischen Kreisen angeordnet sind, deren Zentren auf der Achse der Paraboloids liegen.

4. Koppler nach Anspruch 3, dadurch gekennzeichnet, daß im Zentrum der konzentrischen Kreise eine Faser, am ersten Kreis sechs Fasern, am zweiten Kreis eine doppelt so große

5

Anzahl, am dritten Kreis eine im Vergleich zum zweiten Kreis doppelte Anzahl usw. angeordnet sind.

FIG. 1

FIG. 2